# EUROPÄISCHE PATENTSCHRIFT

(11) **EP 4 026 754 B1**
(45) Veröffentlichungstag und Bekanntmachung des Hinweises auf die Patenterteilung: **23.08.2023**
(21) Anmeldenummer: 21212315.2
(22) Anmeldetag: 03.12.2021
(51) Int. Cl.: B62D 5/04, B62D 6/00

(54) **KOMPENSATION EINES LENKUNGS-SCHIEFZIEHVERHALTENS BEI EINER MEHRZAHL VON ANTRIEBSMASCHINEN**
COMPENSATION OF STEERING SLIPPAGE IN A PLURALITY OF DRIVE MACHINES
COMPENSATION DU COMPORTEMENT DE DÉRIVE DE DIRECTION DANS UNE PLURALITÉ DE MACHINES MOTRICE

(30) Priorität: 07.01.2021 DE 102021200093
(43) Veröffentlichungstag der Anmeldung: 13.07.2022
(73) Patentinhaber: VOLKSWAGEN AG, 38440 Wolfsburg (DE)
(72) Erfinder: Dreyer, Dirk, 31655 Stadthagen (DE)

(56) Entgegenhaltungen:
- DE-A1-102005 057 938
- DE-A1-102006 015 636
- DE-A1-102010 030 532
- DE-A1-102015 221 711
- DE-A1-102018 211 022

## Beschreibung

Kompensation eines Lenkungs-Schiefziehverhaltens bei einer Mehrzahl von Antriebsmaschinen Die Erfindung betrifft ein Verfahren und eine Steuereinrichtung zum Kompensieren eines Schiefziehverhaltens einer elektromechanischen Lenkung eines Kraftfahrzeugs, wie beispielsweise eines Personenkraftwagens oder eines Lastkraftwagens.

Es ist bekannt, dass es bei einer Kraftfahrzeuglenkung zu Schiefzieheffekten kommen kann. Hierunter kann das Auftreten von lenkwirksamen Momenten verstanden werden, die aus Antriebskräften des Kraftfahrzeugs resultieren. Eine bekannte Ursache sind Lenkmomente, die durch Beugewinkel von kardanischen Antriebswellen hervorgerufen werden, die mit einer angetriebenen Achse des Kraftfahrzeugs gekoppelt sind. Dies tritt insbesondere bei quer eingebauten Antrieben auf. Weitere diesbezügliche Details finden sich in der DE 102 44 070 A1 und EP 1 767 437 B1.

Das Dokument DE 10 2018 211 022 A1 offenbart ein Verfahren zum Kompensieren eines Schiefziehverhaltens einer Lenkung eines Kraftfahrzeugs, wobei das Kraftfahrzeug eine Mehrzahl von Antriebsmaschinen aufweist, wobei das Verfahren diejenigen Antriebsmaschinen ermittelt, die aktuell eine Antriebskraft erzeugen und weiter eine Steuergröße zum Ansteuern eines Lenkaktuators auf Basis einer ermittelten Antriebskraft der jeweiligen Antriebsmaschinen ermittelt.

In dem o.g. Stand der Technik werden auch Ansätze zur Kompensation dieses antriebsbedingten Schiefziehverhaltens diskutiert. Insbesondere wird das Erlernen von Korrekturwerten beschrieben, auf deren Basis ein Lenkaktor des Kraftfahrzeugs Lenkmomente erzeugen kann, um die antriebsbedingt hervorgerufenen Schiefzieh-Lenkmomente zu kompensieren.

Voraussetzung bekannter Kompensationsstrategien ist, dass eine aktuell erzeugte Antriebskraft präzise bestimmbar ist. Andernfalls könnte ein aktorisch erzeugtes Kompensations-Lenkmoment zu groß oder zu klein ausfallen, um das aufgrund der tatsächlich wirksamen Antriebskräfte erzeugte Schiefziehverhalten zu kompensieren. Dies kann aus Fahrersicht zu Komforteinbußen und Irritationen führen.

Erfindungsgemäß wurde erkannt, dass die korrekte Abschätzung der insgesamt wirkenden Antriebskraft und/oder Anwendung gängiger Kompensationsstrategien spätestens dann problematisch ist, wenn eine Mehrzahl von Antriebsmaschinen gleichzeitig Antriebskräfte erzeugen, wie dies beispielsweise bei bekannten hybriden Antriebssträngen der Fall ist.

Eine Aufgabe der Erfindung ist es daher, die Kompensation des Schiefziehverhaltens von Kraftfahrzeugen zu verbessern, insbesondere wenn diese eine Mehrzahl von Antriebskräfte erzeugenden Antriebsmaschinen aufweisen.

Diese Aufgabe wird durch ein Verfahren mit den Merkmalen des beigefügten Anspruchs 1 sowie eine Steuereinrichtung gemäß dem nebengeordneten Vorrichtungsanspruch gelöst. Vorteilhafte Weiterbildungen sind in den abhängigen Ansprüchen angegeben.

In Abweichung vom Stand der Technik sieht die Erfindung vorteilhafterweise vor, je Antriebsmaschine eine aufgrund der hiervon erzeugten Antriebskräfte individuell erforderliche Schiefzieh-Kompensation zu bestimmen. Bevorzugt wird je Antriebsmaschine eine erzeugte Antriebskraft ermittelt sowie vorzugsweise darauf basierend eine bereitzustellende Schiefzieh-Kompensation bzw. ein Schiefzieh-Kompensationsanteil. In diesem Zusammenhang können auch für jede Antriebsmaschine individuelle Kompensationsgrößen erlernt und/oder hinterlegt werden. Vorzugsweise wird jedoch keine insgesamt vom Antriebsstrang erzeugte Antriebskraft ermittelt und mit einer für den gesamten Antriebsstrang gültigen Kompensationsgröße zum Bestimmen einer geeigneten Schiefzieh-Kompensation verrechnet. Dies behebt das Problem, dass insbesondere bei hybriden Antriebssträngen oder allgemein Antriebssträngen mit einer Mehrzahl von gegebenenfalls auch gleichartigen Antriebsmaschinen die insgesamt wirksame Antriebskraft schwer abzuschätzen ist und/oder Kompensationsgrößen für den gesamten Antriebsstrang nicht zufriedenstellend bestimmbar sind.

Insbesondere wird ein Verfahren zum Kompensieren eines Schiefziehens oder auch Schiefziehverhaltens einer (insbesondere elektromechanischen) Lenkung eines Kraftfahrzeugs vorgeschlagen, wobei das Kraftfahrzeug eine Mehrzahl von (gleichartigen oder ungleichartigen) Antriebsmaschinen aufweist und für jede Antriebsmaschine wenigstens eine Kompensationsgröße zum Kompensieren eines von dieser Antriebsmaschine verursachten Schiefziehverhaltens hinterlegt ist; und wobei das Verfahren aufweist:
- Ermitteln derjenigen Antriebsmaschinen, die aktuelle eine Antriebskraft erzeugen (insbesondere eine Antriebskraft oberhalb eines vorbestimmten Schwellenwerts);
- Ermitteln einer Ansteuergröße für einen Lenkaktor (insbesondere eines auf die Lenkung oder ein Lenkgetriebe einwirkenden Elektromotors) auf Basis der Antriebskraft einer jeden ermittelten Antriebsmaschine und einer für jede Antriebsmaschine hinterlegte Kompensationsgröße.

Allgemein kann also betriebszustands- bzw. fahrzustandsabhängig ermittelt werden, welche Antriebsmaschinen aktuell aktiv sind, d.h. eine Antriebskraft erzeugen. Optional kann diese Antriebskraft daraufhin überprüft werden, ob diese ein Schiefziehrisiko begründet, also beispielsweise oberhalb eines (bevorzugt Antriebsmaschinen-individuellen) Schwellenwertes liegt oder nicht. Anders ausgedrückt kann also je Antriebsmaschine untersucht werden, ob hiervon erzeugte Antriebskräfte lenkwirksame Momente erzeugen und somit das Kraftfahrzeug in an sich bekannter Weise und entgegen einer Fahrererwartung oder Fahrerabsicht auslenken (d.h. schiefziehen). Allgemein können hierfür je Antriebsmaschine die erzeugten Antriebskräfte als von diesen Antriebsmaschinen abrufbare Steuergrößen erhalten werden.

Bei den Antriebsmaschinen kann es sich z.B. um einen Verbrennungsmotor oder einen Elektromotor handeln. Diese können bevorzugt auf eine gemeinsame Radachse des Fahrzeugs oder auch auf unterschiedliche Achsen einwirken. Insbesondere wenn die Antriebsmaschinen über zwischengekoppelte Antriebswellen ein Antriebsmoment auf die Radachse(n) übertragen, können die aus dem Stand der Technik bekannten Schiefzieheffekte auftreten, die vorliegend kompensiert werden sollen.

Bei dem Lenkaktor kann es sich um einen eine Zahnstangenkraft erzeugenden Aktor handeln. Entsprechend kann es sich bei der Lenkung um eine elektromechanische Lenkung handeln, bei der der Lenkaktor in eine Zahnstange dieser Lenkung eingreift. Bevorzugt ist auch eine vom Fahrer betätigbare Lenkhandhabe mit dieser Zahnstange mechanisch gekoppelt.

Bei der Kompensationsgröße kann es sich um eine erlernte Kompensationsgröße handeln. Sie kann auch als Lernwert, Kompensationswert oder Kompensationsfaktor bezeichnet werden. Allgemein kann die Kompensationsgröße mit der Antriebskraft einer Antriebsmaschine multiplizierbar sein, um eine zum Kompensieren des Schiefzieheffektes dieser Antriebsmaschine erforderlichen Schiefzieh-Kompensationskraftanteil zu bestimmen. Letzterer kann einer von dem Lenkaktor aufzubringenden Zahnstangenkraft entsprechen, die bereitzustellen ist, um ein den Schiefzieheffekt ausgleichendes Lenkmoment zu erzeugen, d.h. das Fahrzeug trotz antriebskraftbedingtem Schiefziehen geradeausfahren zu lassen.

Die Ansteuergröße kann folglich einer mit dem Aktor zu erzeugenden Kraft (insbesondere Zahnstangenkraft) entsprechen. Allgemein kann die Ansteuergröße verwendet werden, um darauf basierend eine Leistungselektronik des Lenkaktors anzusteuern. Die Kompensationsgrößen können in einer Speichereinrichtung hinterlegt sein und/oder im Rahmen eines fortlaufend durchgeführten Lernvorganges aktualisiert werden.

Wenn eine Mehrzahl von Antriebsmaschinen ermittelt wird, die eine (ein Schiefziehrisiko begründende) Antriebskraft erzeugen, kann eine Ansteuergröße auf Basis jeder der Antriebskräfte und Kompensationsgrößen der insgesamt ermittelten Antriebsmaschinen bestimmt werden. Anders ausgedrückt kann die Ansteuergröße basierend auf sämtlichen von den Antriebsmaschinen potentiell ausgehenden Schiefzieheffekten ermittelt werden und/oder kann diese ein Kompensieren sämtlicher entsprechender Schiefzieheffekte ermöglichen.

Eine Weiterbildung sieht vor, dass die Ansteuergröße einer Schiefzieh-Kompensationskraft entspricht, die von dem Lenkaktor bereitzustellen ist. Wie erwähnt, kann es sich hierbei insbesondere um eine von dem Lenkaktor aufzubringende Zahnstangenkraft handeln. Gemäß einer bevorzugten Variante wird die Ansteuergröße (für den Lenkaktor) auf Basis der Produkte der jeweiligen Antriebskraft und der jeweiligen Kompensationsgröße einer jeden ermittelten Antriebsmaschine ermittelt. Insbesondere kann also die jeweilige Antriebskraft mit der Kompensationsgröße einer jeweiligen Antriebsmaschine multipliziert werden, um einen von dem Lenkaktor aufzubringenden Kraftanteil zu bestimmen, um den Schiefzieheffekt dieser Antriebsmaschine auszugleichen.

Entsprechend sieht eine Weiterbildung vor, dass dann, wenn eine Mehrzahl von Antriebsmaschinen ermittelt wird (also eine Mehrzahl von potentiell ein Schiefziehen verursachenden Antriebsmaschinen), die Ansteuergröße auf Basis der Summe der jeweiligen Produkte aus Antriebskraft und Kompensationsgröße dieser Antriebsmaschinen bestimmt wird. Anders ausgedrückt können diese Produkte also aufsummiert werden, um darauf basierend die Ansteuergröße zu ermitteln. Insbesondere kann die Ansteuergröße dieser Summe entsprechen und/oder kann diese Summe der insgesamt von dem Lenkaktor bereitzustellenden Schiefzieh-Kompensationskraft entsprechen.

Gemäß einem weiteren Aspekt ist für jede Antriebsmaschine ein Lernvorgang ausführbar. Im Rahmen dieses Lernvorgangs kann die Kompensationsgröße der Antriebsmaschine erlernt werden. Dabei kann zunächst ein Startwert der Kompensationsgröße z.B. bei Fahrzeugauslieferung hinterlegt sein. Dieser Startwert kann im Rahmen von oder als entsprechender Lernvorgang einen entsprechend aktuellen bzw. erlernten Wert der Kompensationsgröße zu erhalten. Das Erlernen kann allgemein umfassen, dass ein geeigneter Wert der Kompensationsgröße im Realbetrieb des Fahrzeugs bestimmt und/oder fortlaufend aktualisiert wird. Dies ist vorteilhaft, da dann auf die Besonderheiten eines spezifischen Fahrzeugs und beispielsweise die mechanischen Toleranzen von dessen Antriebsstrang geeignet reagiert werden kann.

Als ein allgemeiner Aspekt dieser Erfindung kann die Kompensationsgröße einem Quotienten aus einer Antriebskraft und einer Kompensationskraft entsprechen. Letztere kann eine Zahnstangenkraft sein, die angewendet wird, damit das Fahrzeug unter Kompensation antriebskraftbedingter Schiefzieheffekte geradeaus fährt. Im Rahmen des Lernvorgangs kann entsprechend die je Antriebsmaschine erzeugte Antriebskraft zur Bestimmung der Kompensationsgröße zugrunde gelegt werden. Die Kompensationskraft kann sich allgemein aus einer aktorisch (d.h. vom Lenkaktor) erzeugten Kraftkomponente sowie einer vom Fahrer erzeugten Kraftkomponenten zusammensetzen, beispielsweise wenn der Fahrer parallel zum Erzeugen von Zahnstangenkräften mit dem Lenkaktor ein Handmoment auf die ebenfalls mit der Zahnstange mechanisch gekoppelte Lenkhandhabe aufbringt.

Insbesondere kann es sich bei der Kompensationsgröße um einen Faktor oder allgemein um eine Größe handeln, die einen linearen Zusammenhang zwischen der aktuellen Antriebskraft einer spezifischen Antriebsmaschine sowie der daraufhin bereitzustellenden Schiefzieh-Kompensationskraft (und/oder einer dieser Kompensationskraft entsprechenden Ansteuergröße) definiert.

Gemäß einer Variante wird die Kompensationsgröße fortlaufend ermittelt (insbesondere als entsprechender Quotient aus aktueller Antriebskraft einer Antriebsmaschine sowie der Kompensationskraft). Im Rahmen des Lernvorgangs wird ein aktueller Wert dieser Kompensationsgröße bevorzugt aber nur dann betrachtet, wenn wenigstens eine vordefinierte Lernbedingung erfüllt ist. Letztere kann umfassen, dass aktuelle Betriebsgrößen der Lenkung und/oder des Fahrzeugs vorbestimmte Bedingungen erfüllen, beispielsweise um sicherzustellen, dass aktuell tatsächlich ein ausreichend signifikantes Schiefziehverhalten vorliegt, das vom Fahrer aktiv kompensiert wird. Bei den entsprechenden Größen kann es sich z.B. um ein vom Fahrer erzeugtes Handmoment handeln, eine Lenkwinkeländerungsrate, eine Antriebskraftänderungsrate (oder auch Antriebs-Beschleunigungskraft) oder eine Größe, die einen Geradeauslauf des Kraftfahrzeugs oder Abweichungen hiervon quantifiziert.

Zusammengefasst sieht eine Weiterbildung vor, dass der Lernvorgang einer jeden Antriebsmaschine eine Überprüfung umfasst, ob wenigstens eine vordefinierte Lernbedingung erfüllt ist. Nur wenn diese vordefinierte Lernbedingung erfüllt ist, können aktuell ermittelte Werte der Kompensationsgröße verwendet werden, um einen zukünftig zu berücksichtigenden Wert der Kompensationsgröße zu aktualisieren, d.h. diesen Wert sukzessiv zu erlernen.

Zusätzlich oder alternativ kann vorgesehen sein, dass der Lernvorgang einer jeden Antriebsmaschine eine Filterung von erhaltenen Werten der Kompensationsgröße umfasst. Die Filterung kann allgemein ermöglichen, dass Ausreißer oder fehlerhaft bestimmte Werte der Kompensationsgröße unberücksichtigt bleiben und/oder unterdurchschnittlich stark gewichtet werden. Deren Einfluss auf den Lernvorgang kann also bewusst durch die Filterung herabgesetzt werden. Entsprechend kann die Filterung jegliche geeignete Maßnahmen und insbesondere statistische Maßnahmen zur Identifizierung entsprechender Ausreißer und/oder unzulässiger Abweichungen von aktuellen Werten der Kompensationsgröße von z.B. zwischenzeitlich oder vormals erlernten Werten der Kompensationsgröße umfassen. Die Filterung kann insbesondere als Langzeitfilterung bezeichnet werden. Sie kann eine Art Mittelwertbildung umfassen und/oder ermöglichen.

Allgemein kann auch vorgesehen sein, dass der Lernvorgang einer jeweiligen Antriebsmaschine nur dann ausführbar ist, wenn die Antriebsmaschine aktuell ein Schiefziehrisiko verursacht oder begründet. Es kann also zunächst ermittelt werden, ob die Antriebsmaschine aktuell aktiv ist, d.h. eine Antriebskraft erzeugt, und/oder ob diese Antriebskraft oberhalb eines vorbestimmten Schwellenwertes liegt. Anders ausgedrückt kann also fahrzustandsabhängig oder, genauer gesagt, je nach im Antriebsstrang aktiven Antriebsmaschinen ermittelt werden, welche Antriebsmaschine aktuell (insbesondere signifikante) Antriebskräfte erzeugt und kann nur diese Antriebsmaschine daraufhin einen Lernvorgang durchführen. Alternativ können derartige Kriterien und Überprüfungen Bestandteil der vordefinierten Lernbedingungen einer jeden Antriebsmaschine sein, d.h. kann also eine Kompensationsgrößen-Wertermittlung fortlaufend weiterlaufen und ermittelt werden, dass beispielsweise aufgrund einer Inaktivität einer Antriebsmaschine für diese aktuell kein Lernvorgang durchzuführen ist.

Die Erfindung betrifft auch eine Steuereinrichtung zum Kompensieren eines Schiefziehverhaltens einer (insbesondere elektromechanischen) Lenkung eines Kraftfahrzeugs, wobei das Kraftfahrzeug eine Mehrzahl von Antriebsmaschinen aufweist und für jede Antriebsmaschine wenigstens eine Kompensationsgröße zum Kompensieren eines von dieser Antriebsmaschine verursachten Schiefziehverhaltens hinterlegt ist; und wobei die Steuereinrichtung dazu eingerichtet ist, diejenigen Antriebsmaschinen zu ermitteln, deren aktuelle Antriebskraft ein Schiefziehrisiko begründet, und eine Ansteuergröße für einen Lenkaktor der Lenkung auf Basis der Antriebskraft einer jeden ermittelten Antriebsmaschine und einer für eine jede Antriebsmaschine hinterlegten Kompensationsgröße zu ermitteln.

Die Steuereinrichtung kann wenigstens ein Steuergerät umfassen. Allgemein kann sie digital und/oder elektrisch betreibbar sein. Sie kann wenigstens eine Prozessoreinrichtung und wenigstens eine Speichereinrichtung umfassen. Auf der Speichereinrichtung können jegliche hierin geschilderten Informationen hinterlegt sein, die zum Durchführen eines erfindungsgemäßen Verfahrens erforderlich sind, beispielsweise jegliche hierin geschilderten Kompensationsgrößen, Bedingungen (insbesondere Lernbedingungen), Schwellenwerte und dergleichen. Ebenso können auf der Speichereinrichtung Programmanweisungen hinterlegt sein, die beim Ausführen durch die Prozessoreinrichtung die Steuereinrichtung zum Ausführen jeglicher hierin geschilderten Verfahrensschritte und/oder Verfahrensmaßnahmen veranlassen.

Allgemein kann die Steuereinrichtung dazu eingerichtet sein, ein Verfahren gemäß jeglichem hierin geschilderten Aspekt auszuführen. Sämtliche im Kontext der Verfahrens erläuterten Weiterbildungen und Varianten sind auch im Kontext der Steuereinrichtung gültig bzw. auf diese übertragbar.

Ausführungsbeispiele der Erfindung werden im Folgenden anhand der beigefügten schematischen Figuren erläutert.
- Fig. 1: zeigt eine schematische Darstellung einer Steuereinrichtung gemäß einem Ausführungsbeispiel der Erfindung, die ein erfindungsgemäßes Verfahren ausführt.
- Fig. 2: zeigt ein Ablaufschema eines von der Steuereinrichtung aus Fig. 1 ausgeführten Verfahrens gemäß einem Ausführungsbeispiel der Erfindung.

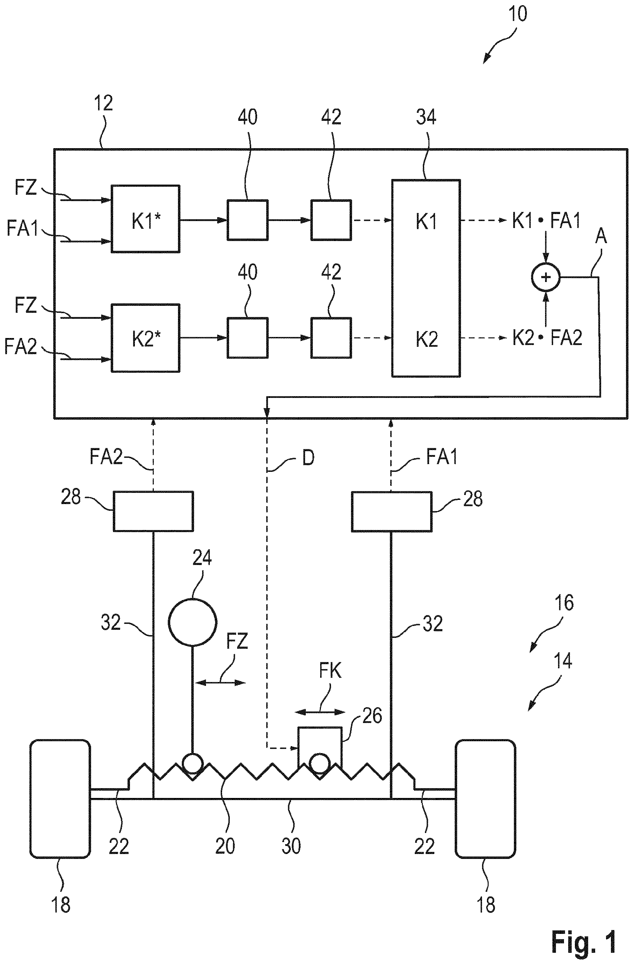

In Fig. 1 sind schematisch stark vereinfacht ausgewählte Komponenten eines Kraftfahrzeugs 10 gezeigt und insbesondere eine Steuereinrichtung 12 des Kraftfahrzeugs 10. Von dem Kraftfahrzeug 10 ist eine Vorderachse 14 abgebildet sowie eine elektromechanische Lenkung 16 zum Auslenken der Räder 18 dieser Vorderachse 14. Die Lenkung 16 umfasst in an sich bekannter Weise eine Zahnstange 20, die über ein jeweiliges Lenkgestänge 22 mit den Rädern 18 gekoppelt ist. Die Zahnstange ist linear verlagerbar und über die Lenkgestänge 22 dazu eingerichtet, diese lineare Verlagerung in eine Lenkbewegung der Räder 18 zu übertragen. Auf die Zahnstange 18 wirkt eine Lenkhandhabe 24 ein, d.h. die Lenkhandhabe 24 ist mechanisch mit der Zahnstange 22 gekoppelt. Ebenso gezeigt ist ein Lenkaktor 26 in Form eines Elektromotors, der über ein Ritzel in die Zahnstange 20 eingreift.

Das Fahrzeug 10 umfasst einen hybriden Antriebsstrang mit zwei schematisch stark vereinfachten Antriebsmaschinen 28. Diese sind in an sich bekannter Weise mit einer Antriebswelle 30 der Vorderachse 14 mechanisch gekoppelt, beispielsweise über eine lediglich schematisch angedeutete kardanische Verbindung 32. Bei den Antriebsmaschinen 28 kann es sich z.B. um einen Elektromotor und um einen Verbrennungsmotor handeln, sodass der resultierende Antriebsstrang aufgrund der ungleichartigen Antriebsmaschinen 28 als ein Hybrid-Antriebsstrang bezeichnet werden kann.

Die Steuereinrichtung 12 ist dazu eingerichtet, den Lenkaktor 26 anzusteuern, und zwar insbesondere in der Weise, dass dieser eine gewünschte Zahnstangenkraft FZ erzeugt (also eine die Zahnstange linear verlagernde Kraft), die in einer definierten Fahrzeuglenkung resultiert. Hierdurch sollen von den Antriebsmaschinen 28 aufgrund bekannter mechanischer Zusammenhänge unerwünscht erzeugte Lenkmomente kompensiert werden, sodass es zu keinem Schiefziehverhalten der Lenkung 16 kommt.

Von der Steuereinrichtung 12, die beispielsweise als ein einzelnes Steuergerät ausgebildet sein kann, sind ausgewählte Funktionen in Fig. 1 schematisch dargestellt. Zunächst gezeigt ist eine Speichereinrichtung 34. In dieser sind Kompensationsgrößen K1, K2 für jede der Antriebsmaschinen 28 hinterlegt, nämlich eine erste Kompensationsgröße K1 für eine erste der Antriebsmaschinen 28 und eine zweite Kompensationsgröße K2 für eine zweite der Antriebsmaschinen 28. Allgemein können auch mehr als zwei Antriebsmaschinen 28 vorgesehen sein, wobei auch für jede weitere entsprechende Antriebsmaschine 28 die hierin geschilderten Zusammenhänge gelten und insbesondere hierfür ebenfalls individuelle Kompensationsgrößen K1, K2 hinterlegt sein können.

Die Steuereinrichtung 12 erhält die aktuell von den Antriebsmaschinen 28 aufgebrachten Antriebskräfte FA1, FA2. Beispielsweise kann sie hierfür auf einen nicht gesondert dargestellten Fahrzeugbus (z.B. CAN-Bus) zugreifen, der auch mit den Antriebsmaschinen 28 verbunden ist. Das Bereitstellen von entsprechenden Antriebskraftgrößen FA1, FA2 bzw. deren Ermittlung ist Stand der Technik.

Dargestellt ist, dass die Antriebskräfte FA1, FA2 der jeweiligen Antriebsmaschinen 28 mit den Antriebsmaschinen-individuellen Kompensationsgrößen K1, K2 multipliziert werden, also deren mathematisches Produkt gebildet wird. Dem liegt zugrunde, dass die Kompensationsgrößen K1, K2 in der nachstehend noch geschilderten Weise Kompensationsfaktoren sind, mittels denen (sowie anhand einer aktuellen Antriebskraft FA1, FA2) eine von dem Lenkaktor 26 zu erzeugende Schiefzieh-Kompensationskraft FK bestimmbar ist. Genauer gesagt ist mittels der Kompensationsgrößen K1, K2 ein jeweiliger Anteil der Kompensationskraft FK bestimmbar, der erforderlich ist, um die von einer entsprechenden Antriebsmaschine 28 erzeugten Schiefzieheffekte auszugleichen.

Vorliegend entspricht die gebildete Summe aus den Produkten der Kompensationsgrößen K1, K2 und jeweiligen Antriebskräfte FA1, FA2 einer Ansteuergröße A für eine Leistungselektronik des Lenkaktors 26 oder ist diese Summe in eine entsprechende Steuergröße A von der Steuereinrichtung 12 umrechenbar. Die Steuergröße A ist über eine Datenverbindung D an die Leistungselektronik des Lenkaktors 26 ausgebbar. Die Datenverbindung D kann beispielsweise über einen nicht gesondert dargestellten Fahrzeugbus bereitgestellt werden.

Als weitere schematisch angedeutete optionale Funktion der Steuereinrichtung 12 ist links von der Speichereinrichtung 34 ein jeweiliger Lernvorgang für die Antriebsmaschinen 28 gezeigt. Dabei wird fortlaufend je Antriebsmaschine 28 zunächst der Quotient aus der aktuellen Antriebskraft FA1, FA2 der Antriebsmaschine und den wirkenden Zahnstangenkräften FZ gebildet. Die Zahnstangenkräfte FZ setzen sich aus der vom Aktor 26 aktuell erzeugten und einer per Handmoment an der Lenkhandhabe 24 erzeugten Zahnstangenkraftkomponente zusammen. Um die Zahnstangenkraft FZ zu bestimmen, kann in an sich bekannter Weise auf einen nicht dargestellten Handmomentensensor sowie einen Momentensensor des Lenkaktors 26 zurückgegriffen werden und/oder auf Betriebsgrößen des Lenkaktors 26, aus denen dessen aktuell erzeugte Zahnstangenkraftkomponente bestimmbar ist.

Für jede der Antriebsmaschinen 28 wird dann fortlaufend ein aktuell gültiger Wert der Kompensationsgröße K1*, K2* ermittelt. Hierfür wird der Quotient aus der jeweiligen Antriebskraft FA1, FA2 und der Zahnstangenkraft FZ gebildet.

Die Zahnstangenkraft FZ entspricht zumindest dann einer Schiefzieh-Kompensationskraft, wenn das Fahrzeug 12 bei wirkenden Antriebskräften geradeaus fahren soll. Letzteres ist per Lernbedingungen überprüfbar.

In einem darauffolgenden optionalen Funktionsblock 40 wird für jede der Antriebsmaschinen 28 bzw. deren aktuellen Kompensationsgrößen K1*, K2* ermittelt, ob vordefinierte Lernbedingungen der vorstehend geschilderten Art erfüllt sind. Nur wenn dies der Fall ist, werden die aktuellen Kompensationsgrößen K1*, K2* verwendet, um die in der Speichereinrichtung 34 hinterlegten und vormals erlernten Werte K1, K2 zu aktualisieren.

Als ein weiterer optionaler Funktionsblock 42 ist ein Filter gezeigt. Hiermit werden jegliche der vorstehend geschilderten Filterfunktionen bereitgestellt, um unzutreffende Werte und insbesondere Ausreißer der aktuellen Kompensationsgrößen K1*, K2* herauszufiltern, sodass diese nicht die erlernten Werte der Kompensationsgröße K1, K2 verfälschen können. Selbst wenn die Lernbedingungen des Blocks 40 erfüllt sind, können also aufgrund der Filterfunktion 42 nicht beliebige Kompensationsgrößenwerte K1*, K2* zum Erlernen der zum Bestimmen der Ansteuergröße A verwendeten Kompensationsgrößen K1, K2 berücksichtigt werden.

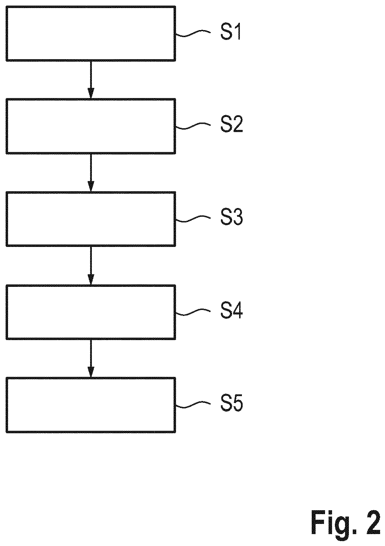

In Fig. 2 ist ein Ablaufschema eines erfindungsgemäßen Verfahrens gezeigt, wie es von der Steuereinrichtung 12 aus Fig. 1 zum Bereitstellen einer Kompensationskraft FK ausführbar ist.

In einem Schritt S1 wird zunächst anhand der jeweiligen Antriebskräfte FA1, FA2 ermittelt, welche der Antriebsmaschinen 28 aktuell eine Antriebskraft erzeugen. Bevorzugt wird dabei überprüft, ob die Antriebskräfte FA1, FA2 einen jeweiligen Schwellenwert überschreiten. Dieser Schwellenwert kann auch null sein.

In einem Schritt S2 wird anhand der hinterlegten Kompensationsgrößen K1, K2 aus der Speichereinrichtung 34 das jeweilige Produkt aus Kompensationsgröße K1, K2 und Antriebskraft FA1, FA2 berechnet. Sofern mehrere Antriebsmaschinen 28 aktuell eine für ein Schiefziehen relevante Antriebskraft erzeugen, werden in dem Schritt S3 die je Antriebsmaschine 28 gebildeten Produkte aus Kompensationsgröße K1, K2 und Antriebskraft FA1, FA2 aufsummiert. Aus dieser Summe der genannten Produkte (oder, im Fall einer lediglich einzelnen aktiven Antriebsmaschine 28, aus dem entsprechenden Einzelwert) wird im Schritt S4 eine Ansteuergröße A für den Lenkaktor 26 ermittelt und der Lenkaktor 26 wird mittels dieser Ansteuergröße A angesteuert.

In einem Schritt S5 bringt der Antriebsaktor 26 infolge des Ansteuerns die Kompensationskraft FK auf die Zahnstange 20 auf, sodass ein entgegen des Schiefziehens wirkendes Lenkmoment mittels der Lenkung 16 erzeugt wird und eine Geradeausfahrt möglich ist.

### Bezugszeichenliste

- 10: Kraftfahrzeug
- 12: Steuereinrichtung
- 14: Vorderachse
- 16: Lenkung
- 18: Fahrzeugrad
- 20: Zahnstange
- 22: Lenkgestänge
- 24: Lenkhandhabe
- 26: Lenkaktor
- 28: Antriebsmaschine
- 30: Antriebswelle
- 32: kardanische Verbindung
- 34: Steuereinrichtung
- 40, 42: Funktionsblock
- FZ: Kompensations-Zahnstangenkraft
- FA1, FA2: Antriebskraft
- K1, K2: Kompensationsgröße
- K1*, K2*: aktueller Wert der Kompensationsgröße
- A: Ansteuergröße
- D: Datenverbindung

## Patentansprüche

1. Verfahren zum Kompensieren eines Schiefziehverhaltens einer Lenkung (14) eines Kraftfahrzeugs (10),
wobei das Kraftfahrzeug (10) eine Mehrzahl von Antriebsmaschinen (28) aufweist und für jede Antriebsmaschine (28) wenigstens eine Kompensationsgröße (K1, K2) zum Kompensieren eines von dieser Antriebsmaschine (28) verursachten Schiefziehverhaltens hinterlegt ist;
und wobei das Verfahren aufweist:
- Ermitteln derjenigen Antriebsmaschinen (28), die aktuell eine Antriebskraft (FA1, FA2) erzeugen;
- Ermitteln einer Ansteuergröße (A) für einen Lenkaktor (26) auf Basis der Antriebskraft (FA1, FA2) einer jeden ermittelten Antriebsmaschine (28) und einer für eine jede Antriebsmaschine (28) hinterlegten Kompensationsgröße (K1, K2).

2. Verfahren nach Anspruch 1,
**dadurch gekennzeichnet, dass** die Ansteuergröße (A) einer Schiefzieh-Kompensationskraft (FZ) entspricht, die von dem Lenkaktor (26) bereitzustellen ist.

3. Verfahren nach Anspruch 1 oder 2,
**dadurch gekennzeichnet, dass** die Ansteuergröße (A) auf Basis der Produkte der jeweiligen Antriebskraft (FA1, FA2) und der jeweiligen Kompensationsgröße (K1, K2) einer jeden ermittelten Antriebsmaschine (28) ermittelt wird.

4. Verfahren nach Anspruch 3,
**dadurch gekennzeichnet, dass** dann, wenn eine Mehrzahl von Antriebsmaschinen (28) ermittelt wird, die Ansteuergröße (A) auf Basis der Summe der jeweiligen Produkte aus Antriebskraft (FA1, FA2) und Kompensationsgröße (K1, K2) dieser Antriebsmaschinen (28) bestimmt wird.

5. Verfahren nach einem der vorangehenden Ansprüche,
**dadurch gekennzeichnet, dass** die Kompensationsgröße (K1, K2) einem Quotienten aus der Antriebskraft (FA1, FA2) einer Antriebsmaschine (28) und einer zur Kompensation des Schiefziehens erforderlichen Schiefzieh-Kompensationskraft (FZ) entspricht.

6. Verfahren nach einem der vorangehenden Ansprüche,
**dadurch gekennzeichnet, dass** für jede Antriebsmaschine (28) ein Lernvorgang ausführbar ist, um die Kompensationsgröße (K1, K2) für diese Antriebsmaschine (28) zu erlernen.

7. Verfahren nach Anspruch 6,
**dadurch gekennzeichnet, dass** der Lernvorgang einer jeden Antriebsmaschine (28) eine Überprüfung umfasst, ob wenigstens eine vordefinierte Lernbedingung erfüllt ist.

8. Verfahren nach einem der Ansprüche 6 bis 7,
**dadurch gekennzeichnet, dass** der Lernvorgang einer jeden Antriebsmaschine (28) eine Filterung von erhaltenen Werten (K1*, K2*) der Kompensationsgröße (K1, K2) umfasst.

9. Verfahren nach einem der Ansprüche 6 bis 8,
**dadurch gekennzeichnet, dass** der Lernvorgang einer Antriebsmaschine (28) nur dann ausführbar ist, wenn die Antriebsmaschine (28) aktuell ein Schiefziehrisiko verursacht.

10. Steuereinrichtung (12) zum Kompensieren eines Schiefziehverhaltens einer Lenkung (14) eines Kraftfahrzeugs (10),
wobei das Kraftfahrzeug (10) eine Mehrzahl von Antriebsmaschinen (28) aufweist und für jede Antriebsmaschine (28) wenigstens eine Kompensationsgröße (K1, K2) zum Kompensieren eines von dieser Antriebsmaschine (28) verursachten Schiefziehverhaltens hinterlegt ist;
und wobei die Steuereinrichtung (12) dazu eingerichtet ist:
- diejenigen Antriebsmaschinen (28) zu ermitteln, die aktuell eine Antriebskraft (FA1, FA2) erzeugen; und
- eine Ansteuergröße (A) für einen Lenkaktor (26) der Lenkung (14) auf Basis der Antriebskraft (FA1, FA2) einer jeden ermittelten Antriebsmaschine (28) und einer für eine jede Antriebsmaschine (28) hinterlegten Kompensationsgröße (K1, K2) zu ermitteln.

## Claims

1. Method for compensating slippage of steering (14) of a motor vehicle (10),
wherein the motor vehicle (10) has a plurality of drive machines (28) and for each drive machine (28) at least one compensation variable (K1, K2) for compensating slippage caused by this drive machine (28) is stored;
and wherein the method includes:
- determining those drive machines (28) which are currently generating a drive force (FA1, FA2);
- determining a control variable (A) for a steering actuator (26) on the basis of the drive force (FA1, FA2) of each drive machine (28) that is determined and a compensation variable (K1, K2) that is stored for each drive machine (28).

2. Method according to Claim 1,
**characterized in that** the control variable (A) corresponds to a slippage compensation force (FZ) that is to be provided by the steering actuator (26) .

3. Method according to Claim 1 or 2,
**characterized in that** the control variable (A) is determined on the basis of the products of the respective drive force (FA1, FA2) and the respective compensation variable (K1, K2) of each drive machine (28) that is determined.

4. Method according to Claim 3,
**characterized in that** if a plurality of drive machines (28) is determined, the control variable (A) is determined on the basis of the sum of the respective products of drive force (FA1, FA2) and compensation variable (K1, K2) of these drive machines (28).

5. Method according to one of the preceding claims, **characterized in that** the compensation variable (K1, K2) corresponds to a quotient of the drive force (FA1, FA2) of a drive machine (28) and a slippage compensation force (FZ) required to compensate the slippage.

6. Method according to one of the preceding claims, **characterized in that** a learning process can be carried out for each drive machine (28) in order to learn the compensation variable (K1, K2) for this drive machine (28).

7. Method according to Claim 6,
**characterized in that** the learning process of each drive machine (28) comprises a check as to whether a predefined learning condition is satisfied.

8. Method according to either of Claims 6 and 7, **characterized in that** the learning process of each drive machine (28) comprises filtering values (K1*, K2*) obtained for the compensation variable (K1, K2) .

9. Method according to one of Claims 6 to 8,
**characterized in that** the learning process of a drive machine (28) can be carried out only when the drive machine (28) is currently causing a risk of slippage.

10. Control device (12) for compensating slippage of steering (14) of a motor vehicle (10),
wherein the motor vehicle (10) has a plurality of drive machines (28) and for each drive machine (28) at least one compensation variable (K1, K2) for compensating slippage caused by this drive machine (28) is stored;
and wherein the control device (12) is configured:
- to determine those drive machines (28) which are currently generating a drive force (FA1, FA2); and
- to determine a control variable (A) for a steering actuator (26) of the steering (14) on the basis of the drive force (FA1, FA2) of each drive machine (28) that is determined and a compensation variable (K1, K2) that is stored for each drive machine (28).

## Revendications

1. Procédé de compensation d'un comportement d'une dérive de la direction (14) d'un véhicule automobile (10),
le véhicule automobile (10) présentant une pluralité de machines motrices (28) et au moins une valeur de compensation (K1, K2) étant enregistrée pour chaque machines motrices (28) dans le but de compenser un comportement de dérive provoqué par cette machine motrice (28) ;
le procédé comprenant :
- la détermination des machines motrices (28) qui génèrent actuellement une force motrice (FA1, FA2) ;
- la détermination d'une valeur de commande (A) pour un actionneur de direction (26) en fonction de la force motrice (FA1, FA2) de chaque machines motrices (28) et la détermination d'une valeur de compensation (K1, K2) enregistrée pour chaque machines motrices (28).

2. Procédé selon la revendication 1,
**caractérisé en ce que** la valeur de commande (A) correspond à une force de compensation du dérive de la direction (FZ) qui doit être fournie par l'actionneur de direction (26).

3. Procédé selon la revendication 1 ou la revendication 2,
**caractérisé en ce que** la valeur de commande (A) est déterminée sur la base des produits de chaque force motrice respective (FA1, FA2) de la valeur de compensation respective (K1, K2) de chaque machine motrice (28) déterminée.

4. Procédé selon la revendication 3,
**caractérisé en ce que**, lorsqu'une pluralité de machines motrices (28) est déterminée, la valeur de commande (A) est déterminée sur la base de la somme des produits respectifs de la force motrice (FA1, FA2) et de la valeur de compensation (K1, K2) de ces machines motrices (28).

5. Procédé selon l'une des revendications précédentes, **caractérisé en ce que** la valeur de compensation (K1, K2) correspond à un quotient de la force motrice (FA1, FA2) d'une machine motrice (28) et d'une force de compensation de dérive de la direction (FZ) nécessaire pour compenser la dérive de la direction.

6. Procédé selon l'une quelconque des revendications précédentes,
**caractérisé en ce qu'**un apprentissage est apte à être effectué pour chaque machine motrice (28) afin de déterminer la valeur de compensation (K1, K2) pour cette machine motrice (28).

7. Procédé selon la revendication 6,
**caractérisé en ce que** l'opération d'apprentissage de chaque machine motrice (28) comprend au moins une vérification pour savoir si au moins une condition d'apprentissage prédéfinie est remplie.

8. Procédé selon l'une des revendications 6 à 7, **caractérisé en ce que** le processus d'apprentissage de chaque machine motrice (28) comprend un filtrage des valeurs obtenues (K1*, K2*) de la quantité de compensation (K1, K2).

9. Procédé selon l'une des revendications 6 à 8, **caractérisé en ce que** l'opération d'apprentissage d'une machine motrice (28) n'est pas exécutable si la machine motrice (28) provoque actuellement un risque de dérive de la direction.

10. Dispositif de commande (12) pour la compensation d'un comportement de dérive de direction (14) d'un véhicule automobile (10),
le véhicule automobile (10) présentant une pluralité de machine motrice (28) et au moins une valeur de compensation (K1, K2) étant enregistrée pour chaque machine motrice (28) afin de compenser un comportement de dérive provoqué par cette machine motrice (28) ;
le dispositif de commande (12) étant conçu pour :
- la détermination des machines motrices (28) qui génèrent actuellement une force motrice(FA1, FA2) ; et
- la détermination d'une valeur de commande (A) pour un actionneur de direction (26) de la direction (14) sur la base de la force motrice (FA1, FA2) de chaque machine motrice (28) déterminée et d'une valeur de compensation (K1, K2) mémorisée pour chaque machine motrice (28).
